# EUROPÄISCHE PATENTSCHRIFT

(11) **EP 3 099 647 B1**
(45) Veröffentlichungstag und Bekanntmachung des Hinweises auf die Patenterteilung: **14.03.2018**
(21) Anmeldenummer: 15705491.7
(22) Anmeldetag: 22.01.2015
(51) Int. Cl.: B01D 46/42, B01D 53/86, B01D 53/90, F27B 7/20, C04B 7/47, F27D 17/00, B01D 53/34

(54) **VERFAHREN ZUR WÄRMEBEHANDLUNG EINES STOFFSTROMS UND ZUR REINIGUNG VON DABEI ENTSTEHENDEN ABGASEN**
METHOD FOR HEAT-TREATING A MATERIAL FLOW AND FOR CLEANING RESULTING EXHAUST GASES
PROCÉDÉ DE TRAITEMENT THERMIQUE D'UN FLUX DE MATIÈRE ET D'ÉPURATION DES GAZ DE FUMÉES RÉSULTANTS

(30) Priorität: 27.01.2014 DE 102014100896
(43) Veröffentlichungstag der Anmeldung: 07.12.2016
(73) Patentinhaber: ThyssenKrupp Industrial Solutions AG, 45143 Essen (DE); thyssenkrupp AG, 45143 Essen (DE)
(72) Erfinder: FLAßPÖHLER, Melanie, 44141 Dortmund (DE); ROHLOFF, Kathrin, 20457 Hamburg (DE); STENDER, Timo, 58730 Fröndenberg (DE)
(74) Vertreter: thyssenkrupp Intellectual Property GmbH
(86) Internationale Anmeldenummer: PCT/EP2015/000112
(87) Internationale Veröffentlichungsnummer: WO 2015/110264

(56) Entgegenhaltungen:
- AT-A4- 505 542
- DE-A1-102011 050 677
- DE-B3-102010 004 011

## Beschreibung

Die Erfindung betrifft ein Verfahren zur Wärmebehandlung eines Stoffstroms und zur Reinigung von dabei entstehenden Abgasen, wobei ein Stoffstrom in einer Vorwärmzone vorgewärmt, in einer Sinterzone gebrannt bzw. gesintert und in einer Kühlzone gekühlt wird, und wobei zumindest die Abgase der Sinterzone den Vorwärmer durchströmen und zur Vorwärmung des Stoffstroms genutzt werden. Die den Vorwärmer verlassenden Abgase werden entstaubt und in wenigstens einem Katalysator von Schadstoffen gereinigt.

Derartige Verfahren kommen beispielsweise bei Zementanlagen oder Anlagen zur Proppantherstellung sowie weiterer Anlagen aus dem Bereich der Mineralsindustrie zum Einsatz. Die den Vorwärmer verlassenden Abgase haben üblicherweise eine Temperatur von etwa 300 - 400 °C. Die nachfolgend angeordneten Staubfilter arbeiten typischerweise jedoch nur in einem tieferen Temperaturbereich, beispielsweise unter 260°C bzw. sogar unter 200°C. Ferner ist man bestrebt, die Wärme des Abgases möglichst weitgehend zu nutzen. Man arbeitet daher möglichst weitgehend in einem sogenannten Verbundbetrieb, bei dem das heiße Abgas des Vorwärmers in einer Zerkleinerungs-, Pelletier- und/oder Trocknungseinrichtung, insbesondere einer Mahltrocknungsanlage, genutzt wird. Dabei kühlt sich das Abgas üblicherweise auf eine Temperatur von etwa 90 bis 120°C ab. In den Betriebsphasen, in denen kein Verbundbetrieb möglich ist, wird die Ofenanlage im sogenannten Direktbetrieb betrieben, bei dem das Abgas in einer Kühleinrichtung auf eine für den Staubfilter geeignete Temperatur abgekühlt wird.

Im nachfolgend angeordneten Katalysator erfolgt eine Schadstoffminderung, z.B. eine Stickoxidminderung. Für den Betrieb der Katalysatoren hat kann eine sogenannte Tail-End-Schaltung, bei welcher der Katalysator nach dem letzten Staubfilter angeordnet ist, verwendet werden, bei der die Wirkung des Katalysators nicht oder nur wenig durch im Abgas enthaltene Staubpartikel beeinträchtigt wird. Die üblichen derzeit verwendeten Katalysatoren benötigen aber Abgastemperaturen die bei etwa 250°C liegen und somit nach dem Staubfilter eine Anhebung der Temperatur der Abgase erfordern. Dabei ist es bekannt, die Anhebung der Temperatur des entstaubten Abgases zumindest teilweise mit Hilfe der Abwärme aus der Kühlzone zu bewirken. Über eine Temperaturregelung wird die Temperatur der den Katalysator durchströmenden Abgase auf einen vorgegebenen Wert von beispielsweise etwa 260° geregelt und zwar unabhängig davon, ob sich die Ofenanlage im Direkt- oder Verbundbetrieb befindet.

Katalysatoren werden in der Abgasreinigung zur Minderung von stickstoff- oder kohlenstoffhaltigen Verbindungen, wie NOₓ, NH₃, CO, CₓH_{y} sowie Dioxinen und Furanen eingesetzt. Neben der Abgastemperatur, die abhängig vom Katalysatortyp und den zu mindernden Verbindungen, zwischen 150 und 600 °C beträgt, sind für die effiziente katalytische Minderung auch Katalysatorgifte, welche die Effektivität des Katalysators durch chemische Reaktionen mindern können und Partikel oder Moleküle, die durch eine Verblockung der Poren die aktive Oberfläche reduzieren können, entscheidend. Die Minderung der katalytischen Aktivität kann hierbei beispielsweise auch durch die katalytische Oxidation von im Rauchgas enthaltenem Schwefeldioxid zu Schwefeltrioxid und anschließender Reaktion mit Ammoniak zu Ammoniumbisulfat direkt vom Katalysator beeinflusst werden. Der Einfluss der Schadstoffe und die Betriebstemperatur des Katalysators stehen in einem unmittelbaren Zusammenhang. So ist die Bildung von Ammoniumbisulfat insbesondere bei geringen Temperaturen, z.B. kleiner 180 °C kritisch. Auch beispielsweise Quecksilber adsorbiert bei geringen Betriebstemperaturen. Weitere Schadstoffe, die die Aktivität des Katalysators negativ beeinflussen können und in den Abgasen der Klinkerherstellung auftreten, sind beispielsweise Alkalien, Schwermetalle oder Feinstäube. Der negative Einfluss der Schadstoffe ist teilweise reversibel. Bei Erhöhung der Betriebstemperatur können sich beispielsweise gebildete Ammoniumsalze oder andere adsorbierte Moleküle zersetzen. Das Ausheizen von Schadstoffen in Tail-End-Katalysatoren durch eine Temperaturerhöhung, wird beispielsweise in der Kraftwerkstechnik und bei Müllverbrennungsanlagen genutzt. Hierdurch steigt jedoch der Energiebedarf, da ein hohes Abgasvolumen aufzuheizen ist.

Aus der DE 10 2010 004 011 B3 ist ein Verfahren und eine Anlage zur Herstellung von Zementklinker und zur Abscheidung von Stickoxiden und Quecksilber aus den Abgasen des Zementherstellungsprozesses bekannt. Dort werden die Abgase eines Vorwärmers zunächst in einem Kühlturm abgekühlt oder über eine Zerkleinerungseinrichtung einem Filter zur Entstaubung zugeführt. Das Abgas wird anschließend in einem Wärmetauscher auf die für einen SCR-Katalysator otimale Temperatur aufgeheizt.

Der Erfindung liegt nun die Aufgabe zugrunde, die Reinigung von Abgasen aus der Wärmebehandlung eines Stoffstromes hinsichtlich der aufzuwendenden Energie zu optimieren.

Erfindungsgemäß wird diese Aufgabe durch die Merkmale des Anspruches 1 gelöst.

Das erfindungsgemäße Verfahren betrifft die Wärmebehandlung eines Stoffstroms und die Reinigung von dabei entstehenden Abgasen, wobei ein Stoffstrom in einer Vorwärmzone vorgewärmt, in einer Sinterzone gebrannt und in einer Kühlzone gekühlt wird, wobei zumindest die Abgase der Sinterzone den Vorwärmer durchströmen und zur Vorwärmung des Stoffstroms genutzt werden, und wobei die den Vorwärmer verlassenden Abgase in einem Verbundbetrieb zumindest anteilig in einer Trocknungs-, Pelletier und/oder Zerkleinerungseinrichtung oder in einem Direktbetrieb zumindest anteilig in einer Kühleinrichtung abgekühlt werden, bevor sie in einem Staubfilter wenigstens teilweise entstaubt werden, und wobei anschließend die Temperatur des wenigstens teilweise entstaubten Abgases wieder angehoben wird, bevor das Abgas in wenigstens einem Katalysator von Schadstoffen gereinigt wird. Die Temperatur, mit der die Abgase den Katalysator im Direktbetrieb durchströmen, soll dabei zumindest phasenweise um wenigstens 10°C höher sein, als die Temperatur, mit dem die Abgase den Katalysator im Verbundbetrieb durchströmen.

Die Erfindung nutzt die Tatsache aus, dass im Direktbetrieb ein höheres Temperaturniveau des Abgases in Vergleich zum Verbundbetrieb zur Verfügung steht. Während im Verbundbetrieb eine zunehmende Deaktivierung des Katalysators zugelassen werden kann, wird der Katalysator im Direktbetrieb zumindest phasenweise mit höherer Temperatur der Abgase betrieben, um eine Reaktivierung des Katalysators zu ermöglichen.

Weitere Ausgestaltungen der Erfindung sind Gegenstand der Unteransprüche.

Die Temperatur, mit der die Abgase den Katalysator im Direktbetrieb durchströmen, sollte zweckmäßigerweise um wenigstens 20°C, vorzugsweise um wenigstens 30°C höher sein, als die Temperatur der Abgase im Verbundbetrieb. Die Temperaturdifferenz nach Staubfilter zwischen Verbundbetrieb und dem Direktbetrieb in den Phasen, wo der Katalysator mit höheren Temperaturen durchströmt wird, liegt zweckmäßigerweise im Bereich von 10 bis 100°C, vorzugsweise im Bereich von 20 bis 80 °C. Dieses kann u.a. über die genannte Kühleinrichtung beeinflusst werden. Vorzugsweise entspricht die Temperaturdifferenz der den Katalysator durchströmenden Abgase zwischen Verbund- und Direktbetrieb der Temperaturdifferenz der den Staubfilter durchströmenden Abgase in Verbund- und Direktbetrieb auf +/- 10°C.

Die Temperaturerhöhung der Abgase zwischen Staubfilter und Katalysator kann durch Wärmeverschiebung aus dem Verfahren zur Wärmebehandlung des Stoffstroms, Zumischen von heißen Gasen und/oder durch zusätzliche Feuerung erfolgen. Des Weiteren kann zumindest ein Teil der Temperaturerhöhung der Abgase zwischen Staubfilter und Katalysator durch Wärmetausch mit den den Katalysator verlassenden Abgasen erfolgen. Für die Temperaturerhöhung können insbesondere Gas-Gas-Wärmetauscher eingesetzt werden.

Als Katalysatoren kommen insbesondere solche in Betracht, die stickstoff- und/oder kohlenstoffhaltige Verbindungen mindern. Bei einer besonders energiesparenden Betriebsweise werden die Abgase nur so weit in ihrer Temperatur erhöht, dass der Katalysator im Verbundbetrieb einer schleichenden Deaktivierung ausgesetzt ist, die im Direktbetrieb zumindest phasenweise durch eine entsprechende Reaktivierung des Katalysator bei höheren Temperaturen wenigstens teilweise wieder ausgeglichen werden kann. Die Katalysatordimensionierung erfolgt idealerweise so, dass über den gesamten Betriebszeitraum die zulässigen Emissionsgrenzwerte eingehalten werden können. Aufgrund einer Überdimensionierung kann bei geringeren Temperaturen im Verbundbetrieb die katalytische Aktivität des Katalysators teilweise durch Schadstoffe gemindert werden. Damit auch am Ende des Verbundbetriebs noch eine vorgegebene Schadstoffminderungsrate des Katalysators erreicht wird, ist vorgesehen, dass die sich im Verbundbetrieb des Katalysators ergebende Deaktivierung durch eine entsprechende Überdimensionierung des Katalysators ausgeglichen wird. Die bei der Erfindung einzusetzenden Katalysatoren sind im Verbundbetrieb für Abgase mit einer Temperatur im Bereich von 150° bis 600°C, vorzugsweise 200° bis 500°C und höchstvorzugsweise 250° bis 450°C ausgelegt. Es können insbesondere auch Katalysatoren zum Einsatz kommen, die im Verbundbetrieb mit Abgastemperaturen von mindestens 300°C, vorzugsweise wenigstens 320°C durchströmt werden sollten. Gerade bei Katalysatoren, die mit derart hohen Temperaturen (> 300°C) betrieben werden müssen, reicht die aus dem Prozess zur Verfügung stehenden Wärmemenge, ggf. mit einer Zufeuerung, gerade so aus, um den Katalysator mit ausreichenden Schadstoffminderungsraten zu betreiben. Man nimmt dabei aber eine gewisse Deaktivierung des Katalysators im Laufe der Zeit in Kauf. Eine derartige Betriebesweise erfordert dann immer wieder Phasen, in denen der Katalysator mit höheren Temperaturen reaktiviert wird.

Das Umschalten von Verbundbetrieb auf einen Direktbetrieb, in dem die Reaktivierung stattfinden soll, erfolgt zweckmäßigerweise in Abhängigkeit der Schadstoffininderungsrate des Katalysators oder nach einer vorgegebenen Zeit. Damit das Abgas, welches den Katalysator im Direktbetrieb durchströmt, eine möglichst hohe Temperatur hat, wird in der Kühleinrichtung nur auf die maximale, für den Staubfilter geeignete Temperatur abgekühlt. Bei der Kühleinrichtung kann es sich beispielsweise um einen Verdampfungskühlturm, eine Wärmeauskopplung oder eine Einrichtung zur Verstromung handeln.

Je nach Art des Katalysators kann dem Abgas vor dem Katalysator ein zur Minderung von Schadstoffen geeignetes Additiv, beispielsweise ein ammoniakhaltiges Additiv, eingedüst bzw. zugegeben werden.

Weitere Ausgestaltungen der Erfindung werden anhand der nachfolgenden Beschreibung und der Zeichnung näher erläutert.

In den Zeichnungen zeigen
- Fig. 1: ein Blockschaltbild einer Anlage zur Wärmebehandlung eines Stoffstroms im Verbundbetrieb und zur Reinigung von dabei entstehenden Abgasen und
- Fig. 2: ein Blockschaltbild einer Anlage zur Wärmebehandlung eines Stoffstroms im Direktbetrieb und zur Reinigung von dabei entstehenden Abgasen.

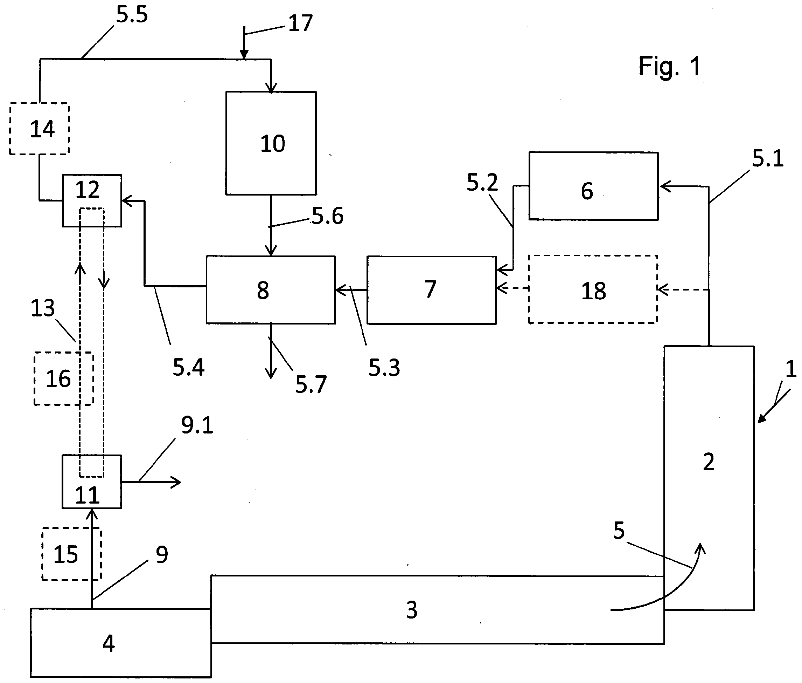

In Fig. 1 dargestellte Anlage dient beispielsweise zur Herstellung von Zementklinker durch Wärmebehandlung eines durch Zementrohmehl gebildeten Stoffstrom 1, der in einer Vorwärmzone 2 vorgewärmt und in einer Sinterzone 3 gebrannt und schließlich in einer Kühlzone 4 gekühlt wird. Bei der Vorwärmzone 2 handelt es sich beispielsweise um einen mehrstufigen Schwebegasvorwärmer, an den sich ggf. vor der Sinterzone 3 noch ein optionaler Kalzinator anschließt. Die Sinterzone 3 wird üblicherweise durch einen Drehrohrofen gebildet, während die Kühlzone 4 beispielsweise als Schubrost ausgebildet ist. In der Sinterzone 3 entstehen Abgase 5, die den Vorwärmer 3 und zuvor ggf. einen vorhandenen Kalzinator durchströmen und zur Vorwärmung bzw. Vorkalzinierung des Stoffstroms 1 dienen. Die den Vorwärmer 1 verlassenden Abgase 5.1 haben üblicherweise eine Temperatur von etwa 300-400°C. Diese Wärmemenge wird im Verbundbetrieb in einer Zerkleinerungseinrichtung 6 genutzt, die beispielsweise als Mahltrocknungsanlage für die Aufbereitung des dem Vorwärmer zuzuführenden Zementrohmehls ausgebildet ist.

Nach der Zerkleinerungseinrichtung 6 beträgt die Temperatur des Abgases 5.2 nur noch etwa 90-120°C und kann einem üblichen Staubfilter 7 (Gewebe- oder Elektrofilter) zugeführt werden. Im Staubfilter wird das Abgas 5.2 zumindest teilweise, vorzugsweise aber auf einen den Emissionsvorschriften entsprechenden Reststaubgehalt entstaubt. Das entstaubte Abgas 5.3 ist jedoch noch mit vor allem gasförmigen Schadstoffen belastet, die in einem Katalysator 10 reduziert werden. Für eine effiziente Schadstoffminderung müssen die dem Katalysator zugeführten Abgase in einem vorgegebenen Temperaturbereich zugeführt werden, der vom verwendeten Katalysator abhängt. Bei vielen im Einsatz befindlichen Katalysatoren liegt dieses Temperaturfenster üblicherweise zwischen 150° bis 600°C. In jedem Fall ist ein erneutes Anheben der Temperatur der entstaubten Abgase 5.3 erforderlich. Hierbei ist es zweckmäßig, wenn zunächst die aus dem Prozess zur Verfügung stehende Wärme genutzt wird. Im dargestellten Ausführungsbeispiel wird daher das entstaubte Abgas 5.3 zunächst mit Hilfe eines Gas-Gas-Wärmetauschers 8 mit Abgasen 5.6 aus dem Katalysator 10 weiter aufgeheizt. Da diese Wärmeübertragung jedoch nicht ausreichen wird, um die für den Katalysator 10 erforderliche Temperatur zu erreichen, ist eine weitere Wärmeverschiebung aus dem Verfahren vorgesehen, indem eine in der Kühlzone 4 entstehende Kühlerabluft 9 zum weiteren Aufheizen der Abgase 5.4 genutzt wird.

Im dargestellten Ausführungsbeispiel wird die Wärmeübertragung zwischen der Kühlerabluft 9 und dem Abgas 5.4 über zwei Wärmetauscher 11 und 12 und einem dazwischen geschalteten Wärmekreislauf 13 realisiert. Die abgekühlte Kühlerabluft 9.1 wird abgeführt und ggf. anderweitig genutzt. Selbstverständlich kann anstelle von zwei Wärmetauschern und einem Wärmekreislauf auch lediglich ein Wärmetauscher verwendet werden, wenn dies durch die räumliche Nähe möglich ist.

Das auf diese Weise weiter aufgeheizte Abgas 5.5 hat nun die für den Katalysator 10 erforderliche Temperatur. Solle dies nicht der Fall sein, kann beispielsweise durch eine zusätzliche Feuerung 14 eine weitere Aufheizung erfolgen. Eine zusätzliche Feuerung 15 könnte auch zur weiteren Aufheizung der Kühlerabluft 9 vorgesehen werden. Des Weiteren wäre es denkbar, eine zusätzliche Feuerung 16 im Bereich des Wärmekreislaufes 13 anzuordnen. In jedem Fall muss in geeigneter Weise gewährleistet werden, dass das dem Katalysator 10 zugeführte Abgas 5.5 ein für die Schadstoffininderung geeignetes Temperaturniveau aufweist. Das erforderliche Temperaturniveau hängt dabei von dem verwendeten Katalysator ab. Vorzugsweise kommt ein Katalysator zum Einsatz, an dem stickstoff- und/oder kohlenstoffhaltige Verbindungen vermindert werden. Zu diesem Zweck kann dem Abgas 5.5 vor dem Katalysator 10 zusätzlich ein zur Minderung von Schadstoffen geeignetes Additiv 17, beispielsweise ein ammoniakhaltiges Additiv, zugeführt werden.

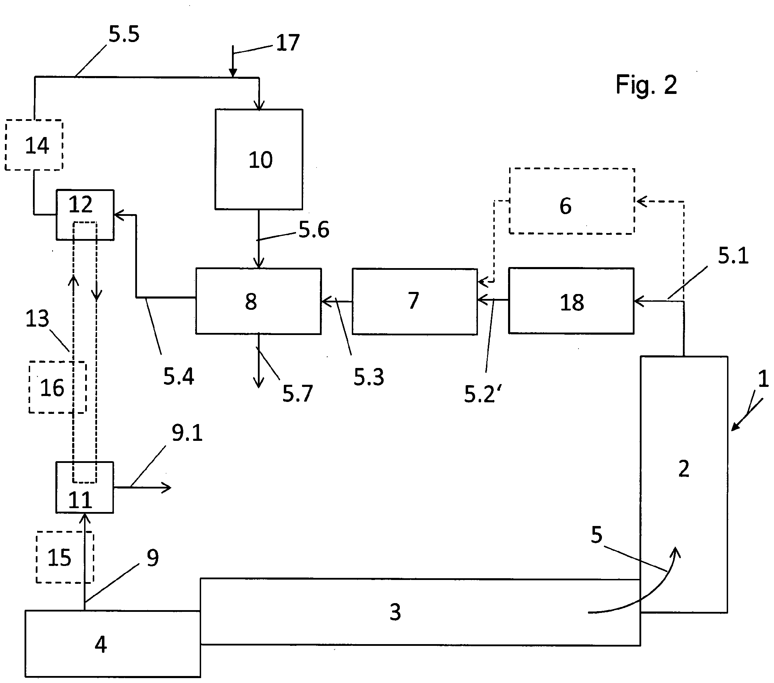

Fig. 2 zeigt die in Fig. 1 dargestellte Anlage im sogenannten Direktbetrieb, der sich dadurch vom Verbundbetrieb unterscheidet, dass das Abgas 5.1 nicht über die Zerkleinerungseinrichtung 6, sondern über eine Kühleinrichtung 18 geführt wird. Der Direktbetrieb wird beispielsweise dann gefahren, wenn die Zerkleinerungseinrichtung zu Wartungszwecken nicht zur Verfügung steht oder aus anderen Gründen abgeschaltet ist. Da der Staubfilter 7 jedoch nicht den hohen Temperaturen des den Vorwärmer verlassenden Abgases 5.1 standhält, muss die Temperatur des Abgases in der Kühleinrichtung 18 auf ein für den Staubfilter 7 noch akzeptables Maß abgesenkt werden. Da man ohnehin für den nachgeschalteten Katalysator wieder höhere Temperaturen benötigt, wird man das Abgas 5.1 in der Kühleinrichtung 18 nur soweit abkühlen, dass das abgekühlte Abgas 5.2' eine möglichst hohe, aber für den Staubfilter 7 noch akzeptable Temperatur aufweist. Ansonsten erfolgt die weitere Behandlung des Abgases mit entsprechender Entstaubung und Temperaturerhöhung sowie Reinigung im Katalysator analog zum Verbundbetrieb.

Allerdings ist vorgesehen, den Katalysator 10 auf unterschiedlichem Temperaturniveau zu fahren. Wird der Katalysator mit Abgasen höherer Temperatur durchströmt, besteht die Möglichkeit einen teilweise deaktivierten Katalysator wieder zu reaktivieren. Dazu wird das vor dem Staubfilter 7 zur Verfügung stehende, höhere Temperaturniveau ausgenutzt, sodass eine Reaktivierung des Katalysators in den Zeiten stattfindet, in denen die Anlage im Direktbetrieb vertrieben wird, wobei der Katalysator im Direktbetrieb auch nur dann mit höheren Temperaturen der Abgase beaufschlagt wird, wenn eine Reaktivierung erforderlich ist. Mit anderen Worten wird man auch im Direktbetrieb nicht unnötigerweise die Temperatur des Abgases über einen für die Schadstoffminderung ausreichenden Temperaturbetrag erhöhen, wenn der Katalysator noch eine ausreichende Schadstoffminderungsrate gewährleistet. Man wird daher durch Messungen in den Abgasströmen 5.6 oder 5.7 nach dem Katalysator 10 die Schadstoffininderungsrate des Katalysators bestimmen, um im Bedarfsfall im Direktbetrieb mit höheren Temperaturen eine wenigstens teilweise Reaktivierung des Katalysators bewirken.

Der zusätzliche Energiebedarf zur Reaktivierung, beispielsweise über die zusätzlichen Feuerungen 14, 15, 16, die z.B. durch Erdgasbrenner realisiert werden können, wird zumindest anteilig reduziert, indem man das im Direktbetrieb zur Verfügung stehende, höhere Energieniveau ausnutzt. Des Weiteren ist es auch denkbar, dass das Verfahren zur Wärmebehandlung des Stoffstroms im Direktbetrieb so betrieben wird, dass eine höhere Wärmemenge für die Temperaturerhöhung des Abgases zur Verfügung steht. Dies kann beispielsweise durch veränderte Brennstoffzufuhr oder Anpassungen der Luftmengen im System erfolgen.

## Patentansprüche

1. Verfahren zur Wärmebehandlung eines Stoffstroms (1) und zur Reinigung von dabei entstehenden Abgasen (5), wobei ein Stoffstrom (1) in einer Vorwärmzone (2) vorgewärmt, in einer Sinterzone (3) gebrannt und in einer Kühlzone (4) gekühlt wird, wobei zumindest die Abgase (5) der Sinterzone den Vorwärmer (2) durchströmen und zur Vorwärmung des Stoffstroms (1) genutzt werden, und wobei die den Vorwärmer verlassenden Abgase (5.1) in einem Verbundbetrieb zumindest anteilig in einer Trocknungs-, Pelletier- und/oder Zerkleinerungseinrichtung (6) oder in einem Direktbetrieb zumindest anteilig in einer Kühleinrichtung (18) abgekühlt werden, bevor sie in einem Staubfilter wenigstens teilweise entstaubt werden, und wobei anschließend die Temperatur des wenigstens teilweise entstaubten Abgases (5.3) wieder angehoben wird, bevor das Abgas in wenigstens einem Katalysator (10) von Schadstoffen gereinigt wird,
**dadurch gekennzeichnet, dass** die Temperatur mit der die Abgase den Katalysator (10) im Direktbetrieb durchströmen zumindest phasenweise um wenigstens 10°C höher ist als die Temperatur mit der die Abgase den Katalysator (10) im Verbundbetrieb durchströmen.

2. Verfahren nach Anspruch 1, **dadurch gekennzeichnet, dass** die Temperatur, mit der die Abgase den Katalysator (10) im Direktbetrieb durchströmen, zumindest phasenweise um wenigstens 20°C höher ist als die Temperatur der Abgase im Verbundbetrieb.

3. Verfahren nach Anspruch 1, **dadurch gekennzeichnet, dass** zumindest ein Teil der Temperaturerhöhung der Abgase zwischen Staubfilter (7) und Katalysator (10) durch Wärmeverschiebung aus dem Verfahren zur Wärmebehandlung des Stoffstroms (1), das Zumischen heißer Gase und/oder durch zusätzliche Feuerung (14, 15,16) erfolgt.

4. Verfahren nach Anspruch 1, **dadurch gekennzeichnet, dass** zumindest ein Teil der Temperaturerhöhung der Abgase zwischen Staubfilter (7) und Katalysator (10) durch Wärmetausch mit den den Katalysator (10) verlassenden Abgasen (5.6) erfolgt.

5. Verfahren nach Anspruch 1, **dadurch gekennzeichnet, dass** zumindest ein Teil der Temperaturerhöhung mittels wenigstens einem Gas-Gas-Wärmetauscher (8, 12) erfolgt.

6. Verfahren nach Anspruch 1, **dadurch gekennzeichnet, dass** im Katalysator (10) stickstoff- und/oder kohlenstoffhaltige Verbindungen gemindert werden.

7. Verfahren nach Anspruch 1, **dadurch gekennzeichnet, dass** der Katalysator (10) im Verbundbetrieb einer schleichenden Deaktivierung ausgesetzt ist und im Direktbetrieb zumindest phasenweise eine wenigstens teilweise Reaktivierung des Katalysators (10) erfolgt.

8. Verfahren nach Anspruch 7, **dadurch gekennzeichnet, dass** das Verfahren zur Zementklinkerherstellung im Direktbetrieb so betrieben wird, dass eine höhere Wärmemenge für die Temperaturerhöhung des Abgases nach dem Staubfilter (7) zur Verfügung steht.

9. Verfahren nach Anspruch 8, **dadurch gekennzeichnet, dass** die sich im Verbundbetrieb des Katalysators ergebende Deaktivierung durch eine entsprechende Überdimensionierung des Katalysators (10) ausgeglichen wird, sodass auch am Ende des Verbundbetriebs noch eine vorgegebene Schadstoffininderungsrate des Katalysators erreicht wird.

10. Verfahren nach Anspruch 1, **dadurch gekennzeichnet, dass** das den Katalysator (10) im Verbundbetrieb durchströmende Abgas eine Temperatur von wenigstens 300°C, vorzugsweise wenigstens 350 °C aufweist.

11. Verfahren nach Anspruch 1, **dadurch gekennzeichnet, dass** ein Umschalten vom Verbundbetrieb auf Direktbetrieb in Abhängigkeit einer Schadstoffininderungsrate des Katalysators (10) oder nach einer vorgegebenen Zeit erfolgt.

12. Verfahren nach Anspruch 1, **dadurch gekennzeichnet, dass** das Abgas im Direktbetrieb in der Kühleinrichtung (18) nur auf die maximale, für den Staubfilter (7) geeignete Temperatur abgekühlt wird.

13. Verfahren nach Anspruch 1, **dadurch gekennzeichnet, dass** dem Abgas (5.5) vor dem Katalysator ein zur Minderung von Schadstoffen geeignetes Additiv (17) eingedüst wird.

14. Verfahren nach Anspruch 1, **dadurch gekennzeichnet, dass** der Kühler (4) in den Phasen der Katalysatorreaktivierung so geregelt wird, dass sich eine höhere Temperatur der Abluft (9) einstellt.

## Claims

1. Method for heat-treating a material flow (1) and for cleaning resulting exhaust gases (5), wherein a material flow (1) is preheated in a preheating zone (2), burned in a sintering zone (3) and cooled in a cooling zone (4), wherein at least the exhaust gases (5) of the sintering zone flow through the preheater (2) and are used for preheating the material flow (1), and wherein the exhaust gases (5.1) leaving the preheater are cooled at least partially in a drying, pelletizing and/or comminuting device (6) in interconnected operation or at least partially in a cooling device (18) in direct operation, before they are at least partly dedusted in a dust filter, and wherein the temperature of the at least partly dedusted exhaust gas (5.3) is then raised again before the exhaust gas is cleaned of pollutants in at least one catalyst (10),
**characterized in that** the temperature with which the exhaust gases flow through the catalyst (10) in direct operation is at least 10°C higher, at least in phases, than the temperature with which the exhaust gases flow through the catalyst (10) in interconnected operation.

2. Method according to Claim 1, **characterized in that** the temperature with which the exhaust gases flow through the catalyst (10) in direct operation is at least 20°C higher than the temperature of the exhaust gases in interconnected operation at least in phases.

3. Method according to Claim 1, **characterized in that** at least part of the temperature increase of the exhaust gases between the dust filter (7) and the catalyst (10) takes place by heat displacement from the method for heat-treating the material stream (1), by addition of hot gases and/or by additional firing (14, 15, 16).

4. Method according to Claim 1, **characterized in that** at least part of the temperature increase of the exhaust gases between the dust filter (7) and the catalyst (10) takes place by heat exchange with the exhaust gases (5.6) leaving the catalyst (10).

5. Method according to Claim 1, **characterized in that** at least part of the temperature increase takes place by means of at least one gas-gas heat exchanger (8, 12).

6. Method according to Claim 1, **characterized in that** nitrogen- and/or carbon-containing compounds are reduced in the catalyst (10).

7. Method according to Claim 1, **characterized in that** the catalyst (10) is exposed to a creeping deactivation in interconnected operation, and in direct operation at least partial reactivation of the catalyst (10) takes place at least in phases.

8. Method according to Claim 7, **characterized in that** the method for producing cement clinker in direct operation is so operated that a greater amount of heat is available for increasing the temperature of the exhaust gas downstream of the dust filter (7).

9. Method according to Claim 8, **characterized in that** the deactivation which occurs in interconnected operation of the catalyst is compensated for by a corresponding over-dimensioning of the catalyst (10), so that a predetermined pollutant reduction rate of the catalyst is still achieved even at the end of interconnected operation.

10. Method according to Claim 1, **characterized in that** the exhaust gas flowing through the catalyst (10) in interconnected operation has a temperature of at least 300°C, preferably at least 350°C.

11. Method according to Claim 1, **characterized in that** switching from interconnected operation to direct operation takes place in dependence on a pollutant reduction rate of the catalyst (10) or after a predetermined time.

12. Method according to Claim 1, **characterized in that** in direct operation the exhaust gas is cooled in the cooling device (18) only to the maximum temperature suitable for the dust filter (7).

13. Method according to Claim 1, **characterized in that** an additive (17) suitable for reducing pollutants is injected into the exhaust gas (5.5) upstream of the catalyst.

14. Method according to Claim 1, **characterized in that** the cooler (4) is so controlled in the phases of catalyst reactivation that a higher temperature of the waste air (9) is established.

## Revendications

1. Procédé de traitement thermique d'un flux de matière (1) et d'épuration de gaz de fumées (5) qui en résultent, dans lequel on préchauffe un flux de matière (1) dans une zone de préchauffage (2), on le brûle dans une zone de frittage (3) et on le refroidit dans une zone de refroidissement (4), dans lequel au moins les gaz de fumées (5) de la zone de frittage traversent le préchauffeur (2) et sont utilisés pour le préchauffage du flux de matière (1), et dans lequel on refroidit les gaz de fumées (5.1) quittant le préchauffeur en fonctionnement mixte au moins proportionnellement dans un dispositif de séchage, de pelletisation et/ou de broyage (6) ou en fonctionnement direct au moins proportionnellement dans un dispositif de refroidissement (18), avant qu'ils ne soient au moins partiellement dépoussiérés dans un filtre à poussières, et dans lequel on élève ensuite de nouveau la température des gaz de fumées au moins partiellement dépoussiérés (5.3) avant que les gaz de fumées soient débarrassés des substances polluantes dans au moins un catalyseur (10), **caractérisé en ce que** la température avec laquelle les gaz de fumées traversent le catalyseur (10) dans le fonctionnement direct est plus élevée au moins par phases d'au moins 10°C que la température avec laquelle les gaz de fumées traversent le catalyseur (10) dans le fonctionnement mixte.

2. Procédé selon la revendication 1, **caractérisé en ce que** la température avec laquelle les gaz de fumées traversent le catalyseur (10) dans le fonctionnement direct est plus élevée au moins par phases d'au moins 20°C que la température des gaz de fumées dans le fonctionnement mixte.

3. Procédé selon la revendication 1, **caractérisé en ce qu'**au moins une partie de l'augmentation de la température des gaz de fumées entre le filtre à poussières (7) et le catalyseur (10) est effectuée par transfert de chaleur à partir du procédé de traitement thermique du flux de matière (1), par l'ajout de gaz chauds et/ou par un chauffage supplémentaire (14, 15, 16).

4. Procédé selon la revendication 1, **caractérisé en ce qu'**au moins une partie de l'augmentation de la température des gaz de fumées entre le filtre à poussières (7) et le catalyseur (10) est effectuée par échange de chaleur avec les gaz de fumées (5.6) quittant le catalyseur (10).

5. Procédé selon la revendication 1, **caractérisé en ce qu'**au moins une partie de l'augmentation de la température est effectuée au moyen d'au moins un échangeur de chaleur gaz-gaz (8, 12).

6. Procédé selon la revendication 1, **caractérisé en ce que** l'on diminue dans le catalyseur (10) les composés contenant de l'azote et/ou du carbone.

7. Procédé selon la revendication 1, **caractérisé en ce que** le catalyseur (10) est exposé dans le fonctionnement mixte à une désactivation rampante et on effectue dans le fonctionnement direct au moins par phases une réactivation au moins partielle du catalyseur (10).

8. Procédé selon la revendication 7, **caractérisé en ce que** l'on conduit le procédé de fabrication de clinker de ciment dans le fonctionnement direct de telle manière qu'une quantité de chaleur accrue soit disponible pour l'augmentation de la température des gaz de fumées après le filtre à poussières (7).

9. Procédé selon la revendication 8, **caractérisé en ce que** l'on compense la désactivation se produisant dans le fonctionnement mixte du catalyseur par un surdimensionnement correspondant du catalyseur (10), de telle manière que l'on atteigne également à la fin du fonctionnement mixte encore un taux de diminution des substances polluantes prédéterminé du catalyseur.

10. Procédé selon la revendication 1, **caractérisé en ce que** les gaz de fumées traversant le catalyseur (10) dans le fonctionnement mixte présentent une température d'au moins 300°C, de préférence d'au moins 350°C.

11. Procédé selon la revendication 1, **caractérisé en ce que** l'on effectue une commutation du fonctionnement mixte au fonctionnement direct en fonction d'un taux de diminution des substances polluantes du catalyseur (10) ou après un temps prédéterminé.

12. Procédé selon la revendication 1, **caractérisé en ce que** l'on refroidit les gaz de fumées dans le fonctionnement direct dans le dispositif de refroidissement (18) uniquement jusqu'à la température maximale adéquate pour le filtre à poussières (7).

13. Procédé selon la revendication 1, **caractérisé en ce que** l'on injecte dans les gaz de fumées (5.5) avant le catalyseur un additif (17) approprié pour la diminution des substances polluantes.

14. Procédé selon la revendication 1, **caractérisé en ce que** l'on régule le refroidisseur (4) dans les phases de la réactivation du catalyseur, de telle manière qu'il s'établisse une température plus élevée de l'air d'échappement (9).
